# EUROPEAN PATENT SPECIFICATION

(11) **EP 2 792 877 B1**
(45) Date of publication and mention of the grant of the patent: **07.10.2015**
(21) Application number: 14164844.4
(22) Date of filing: 16.04.2014
(51) Int. Cl.: F02M 51/06, F02M 61/18, F16K 15/16, F02M 61/20

(54) **Electromagnetic fuel injector with braking device**
Elektromagnetisches Kraftstoffeinspritzventil mit Bremsvorrichtung
Injecteur électromagnétique de carburant avec dispositif de freinage

(30) Priority: 17.04.2013 IT BO20130169
(43) Date of publication of application: 22.10.2014
(73) Proprietor: Magneti Marelli S.p.A., Corbetta (MI) (IT)
(72) Inventor: Petrecchia, Stefano, 06034 Foligno (IT); Lolli, Massimo, 40123 Bologna (IT); Mattioli, Massimo, 40012 Calderara Di Reno (IT); Vezzani, Enrico, 40141 Bologna (IT); De Vita, Daniele, 40024 Castel San Pietro Terme (IT)
(74) Representative: Maccagnan, Matteo

(56) References cited:
- EP-A1- 1 369 579
- EP-A1- 2 508 744
- EP-A2- 1 650 428
- DE-A1-102009 045 728
- DE-C- 202 465
- US-B1- 6 318 646

## Description

### TECHNICAL FIELD

The present invention relates to an electromagnetic fuel injector.

### PRIOR ART

An electromagnetic fuel injector (e.g. of the type described in patent application EP1619384A2) generally comprises a cylindrical tubular body provided with a central feeding channel, which has a fuel conveying function, and ends with an injection nozzle adjusted by an injection valve controlled by an electromagnetic actuator. The injection valve is provided with a needle, which is moved by the action of the electromagnetic actuator between a closing position and an opening position of the injection nozzle against the bias of a closing spring, which tends to maintain the needle in the closing position. The electromagnetic actuator is normally provided with a closing spring which pushes the needle towards the closing position and with an electromagnet which pushes the needle towards the opening position against the elastic bias generated by the spring.

The electromagnet comprises a coil which is externally arranged in a fixed position about the tubular body, a movable plunger which is firmly connected to the needle and is movably mounted inside the tubular body, and a fixed magnetic pole which is made of ferromagnetic material, is arranged within the tubular body at the coil and is adapted to magnetically attract the plunger. The magnetic pole is centrally perforated and has a central through hole having the function of allowing the fuel to flow towards the injection nozzle. The closing spring is arranged inside the central hole and is compressed between a perforated catch body driven into the central hole and the plunger in order to push the plunger, and thus the needle integral with the plunger, towards the closing position of the injection nozzle.

The manufacturers of Otto cycle heat engines (i.e. spark ignited engines) require to increase the fuel feeding pressure (even in excess of 50 Mpa) to improve the mixing of fuel and supporter of combustion (i.e. the air taken in the cylinders) and thus reduce the generation of black smoke (which indicates poor combustion), and to increase the dynamic performance of the electromagnetic injectors (i.e. to increase the response speed of the electromagnetic injectors to commands) in order to inject small amounts of fuel with the goal of fractioning the fuel injection into multiple separate injections (the generation of polluting substances during combustion can thus be reduced).

In an electromagnetic fuel injector, increasing the fuel feeding pressure determines a proportional increase of the hydraulic forces involved, and thus obliges to use stronger closing springs and more powerful electromagnets. In order to increase the power of an electromagnet (i.e. to increase the magnetic attraction force generated by the electromagnet) either higher performance materials can be used (but with a considerable increase in costs which is normally not acceptable by the modern automotive industry) or the size of the electromagnet can be increased. In all cases, an increase in the electromagnet size also determines an increase of the magnetic inertia and mechanical inertia of the electromagnet, which then becomes slower; in other words, increasing the size of the electromagnet inevitably degrades the dynamic performance of the electromagnet itself.

In order to obtain an increase of the force generated by the electromagnet without degrading the dynamic performance of the electromagnet itself at the same time, patent EP1650428B1 suggests to double the electromagnet; i.e., two small-sized twin electromagnets are used instead of one single large-sized electromagnet.

When the injection valve is closed, there is an autoclave force of hydraulic nature which pushes on the shutter and maintains the shutter in the closing position (i.e. the higher the fuel feeding pressure, the higher this autoclave force). Therefore, in order to open the injection valve, the electromagnetic actuator needs to generate on the needle a force which overcomes the autoclave force added to the elastic bias exerted by the closing spring; however, the autoclave force suddenly disappears as soon as the injection valve opens, thus the injection valve opens very quickly and violently with an extremely fast movement of the needle. Such a fast, violent opening of the injection valve determines a very steep and often irregular ramp in the initial part (called ballistic zone) of the injection law of the injector (i.e. the law which relates the actuation time, i.e. the driving time, to the injected fuel amount).

The fact that the initial part (i.e. the ballistic zone) of the injection law has a very steep and often irregular ramp makes correctly controlling the fuel injection very complex, because at such a very steep ramp tiny differences in the injection time, i.e. in the control time, determine substantial differences in the injected fuel amount.

### DESCRIPTION OF THE INVENTION

It is the object of the present invention to provide an electromagnetic fuel injector which is free from the above-described drawbacks, i.e. which allows to stabilize the initial part (i.e. the ballistic zone) of the injection law, while being easy and cost-effective to be manufactured.

According to the present invention, an electromagnetic fuel injector is provided as claimed in the appended claims.

### BRIEF DESCRIPTION OF THE DRAWINGS

The present invention will now be described with reference to the accompanying drawings, which show a non-limitative embodiment thereof, in which:
- figure 1 is a longitudinal section of a fuel injector manufactured in accordance with the present invention;
- figure 2 shows an injection valve of the injector in figure 1 on an enlarged scale;
- figure 3 shows an electromagnetic actuator of the injector in figure 1 on an enlarged scale;
- figure 4 shows a plunger of an upper electromagnet of the electromagnetic actuator in figure 3 on an enlarged scale;
- figure 5 shows a plan view of an anti-rebound device coupled to a lower face of the plunger in figure 4; and
- figure 6 shows a plan view of a braking device coupled to an upper face of the plunger in figure 4.

### PREFERRED EMBODIMENTS OF THE INVENTION

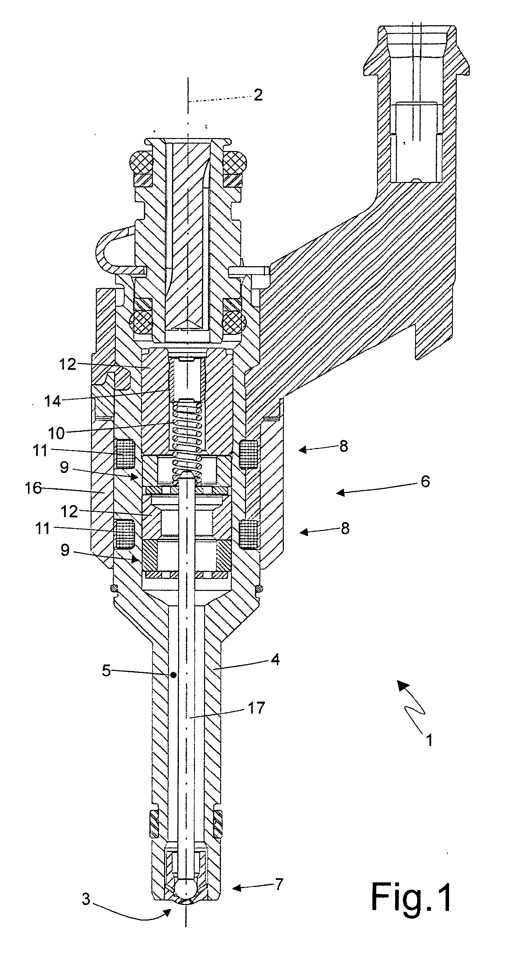

In figure 1, reference numeral 1 indicates as a whole a fuel injector, which substantially has a cylindrical symmetry about a longitudinal axis 2 and is adapted to be controlled to inject fuel from an injection nozzle 3 which leads directly into a combustion chamber (not shown) of a cylinder. Injector 1 comprises a supporting body 4, which has a variable-section, cylindrical tubular shape along longitudinal axis 2, and has a feeding duct 5 extending along the whole length of the supporting body 4 itself to feed pressurized fuel towards the injection nozzle 3.

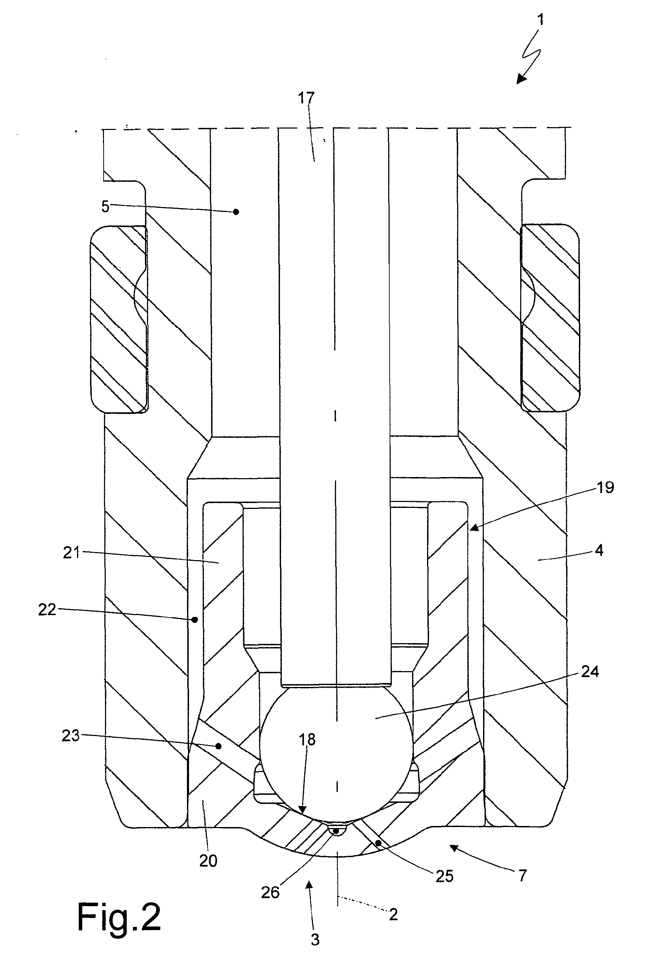

The supporting body 4 houses an electromagnetic actuator 6 at an upper portion thereof and an injection valve 7 (shown in greater detail in figure 2) at a lower portion thereof; in use, the injection valve 7 is actuated by the electromagnetic actuator 6 to adjust the fuel flow through the injection nozzle 3, which is obtained at the injection valve 7 itself.

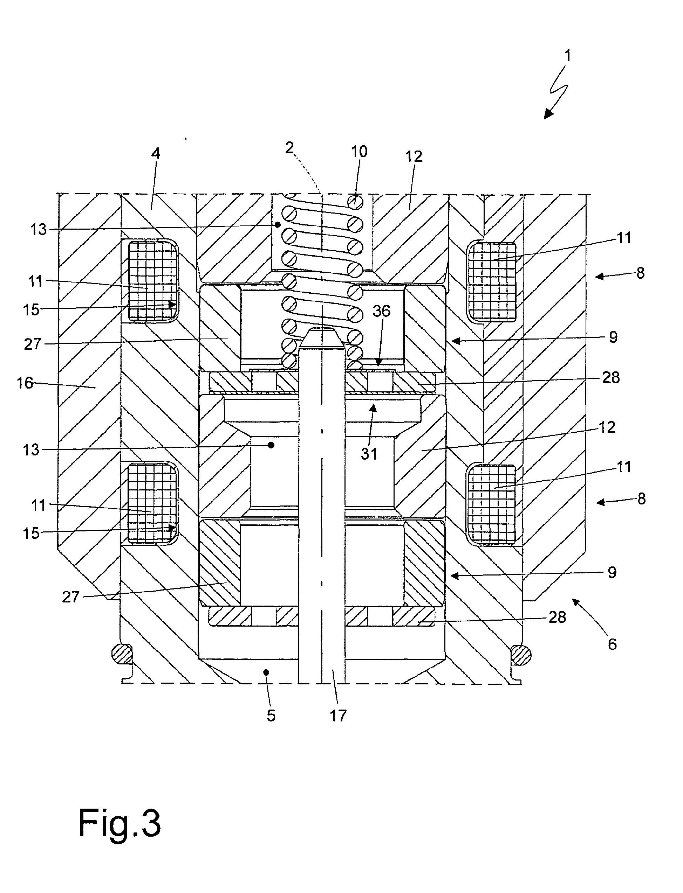

As shown in figure 3, the electromagnetic actuator 6 comprises a pair of twin electromagnets 8 (upper and lower electromagnets, respectively), which are activated together to work simultaneously. When energized, each electromagnet 8 is adapted to move a respective plunger 9 made of ferromagnetic material along axis 2, from a closing position to an opening position of the injection valve 7 against the bias of a single, common closing spring 10 which tends to maintain plunger 9 in the closing position of the injection valve. Each electromagnet 8 comprises a coil 11, which is electrically fed by a control unit (not shown) and is housed outside the supporting body 4, and a magnetic armature 12 (or magnetic pole 12), which is housed within the supporting body 4 and has a central hole 13 to allow the fuel to flow towards the injection nozzle 3. A catch body 14 (shown in figure 1), which has a tubular cylindrical shape (possibly open along a generating line) to allow the fuel to flow towards the injection nozzle 3 and is adapted to maintain the common spring 10 compressed against the plunger 9 of the upper electromagnet 8, is driven in fixed position into the central hole 13 of the magnetic armature 12 of the upper electromagnet 8.

Each coil 11 is wound directly inside an annular slot 15 thereof, which is obtained by means of stock removal from the outer surface of the supporting body 4. Each coil 11 consists of a enameled conductor wire provided with a self-bonding paint and has a small axial dimension (i.e. a dimension measured along the longitudinal axis 2) to minimize the dispersed magnetic fluxes. At coils 11, a protection body 16 is coupled about the supporting body 4, which has a tubular shape and is used to ensure suitable mechanical protection to the coils 11, to allow the magnetic flux lines generated by the coils 11 to be closed, and to increase the mechanical strength of the supporting body 4 at structural weak points which are inevitably introduced by the presence of the slots 15.

The plungers 9 form part of a movable equipment, which further comprises a shutter or needle 17, having an upper portion integral with each plunger 9 and a lower portion cooperating with a valve seat 18 (shown in figure 2) of the injection valve 7 to adjust the fuel flow through the injection nozzle 3 in a known way.

In use, when the electromagnets 8 are de-energized, each plunger 9 is not attracted by its magnetic armature 12 and the elastic bias of spring 10 pushes the plungers 9 together with the needle 17 downwards; in this situation, the injection valve 7 is closed. When the electromagnets 8 are energized, each plunger 9 is magnetically attracted by its magnetic armature 12 against the elastic bias of spring 10 and the plungers 9 together with the needle 17 move upwards to determine the opening of the injection valve 7.

In order to accurately determine the upward stroke of needle 17, the plunger 9 of the upper electromagnet 8 has a shorter effective stroke than the effective stroke of the plunger 9 of the lower electromagnet 8. Thereby, when the electromagnets 8 are energized, only the plunger 9 of the upper electromagnet 8 will ever come into contact with and abut against its magnetic armature 12 regardless of the inevitable construction tolerances. In order to limit the effective stroke of the plunger 9 of the upper electromagnet 8, either the lower surface of armature 12 or the upper surface of plunger 9 is coated with a layer of hard, non-ferromagnetic metal material, preferably chromium; thereby, the thickness of the chromium layer determines the reduction of the effective stroke of the plunger 9 of the upper electromagnet 8. Further functions of the chromium layer are: increasing the shock resistance of the zone, and especially avoiding magnetic sticking phenomena due to a direct contact between the ferromagnetic material of plunger 9 and the ferromagnetic material of armature 12. In other words, the chromium layer defines a gap, which prevents the magnetic attraction forces due to the residual magnetism between plunger 9 and armature 12 from reaching too high values, i.e. higher than the elastic bias generated by spring 10.

Furthermore, only the plunger 9 of the upper electromagnet 8 is subjected to mechanical precision machining to have a calibrated outer diameter which is substantially equal (obviously by defect) to the inner diameter of the feeding channel 5; on the contrary, the plunger 9 of the lower electromagnet 8 has a non-calibrated outer diameter which is always smaller than the inner diameter of the feeding channel 5. Thereby, only the plunger 9 of the upper electromagnet 8 serves the function of guiding needle 17 to control the axial sliding of needle 17 along the longitudinal axis 2. Such a construction choice allows to reduce manufacturing costs, because only the plunger 9 of the upper electromagnet 8 needs to be subjected to precision, and thus costly, mechanical machining operations.

A shown in figure 2, the valve seat 18 is defined in a sealing element 19, which is monolithic, seals the bottom of the feeding channel 5 of the supporting body 4, and is crossed by the injection nozzle 3. In particular, the sealing element 19 comprises a discshaped capping element 20, which seals the bottom of the feeding channel 5 of the supporting body 4 and is crossed by the injection nozzle 3. A guiding element 21 rises from the capping element 20, which has a tubular shape, houses a needle 17 therein for defining a lower guide of the needle 17 itself, and has an outer diameter which is smaller than the inner diameter of the feeding channel 5 of the supporting body 4, so as to define an outer annular channel 22 through which the pressurized fuel can flow.

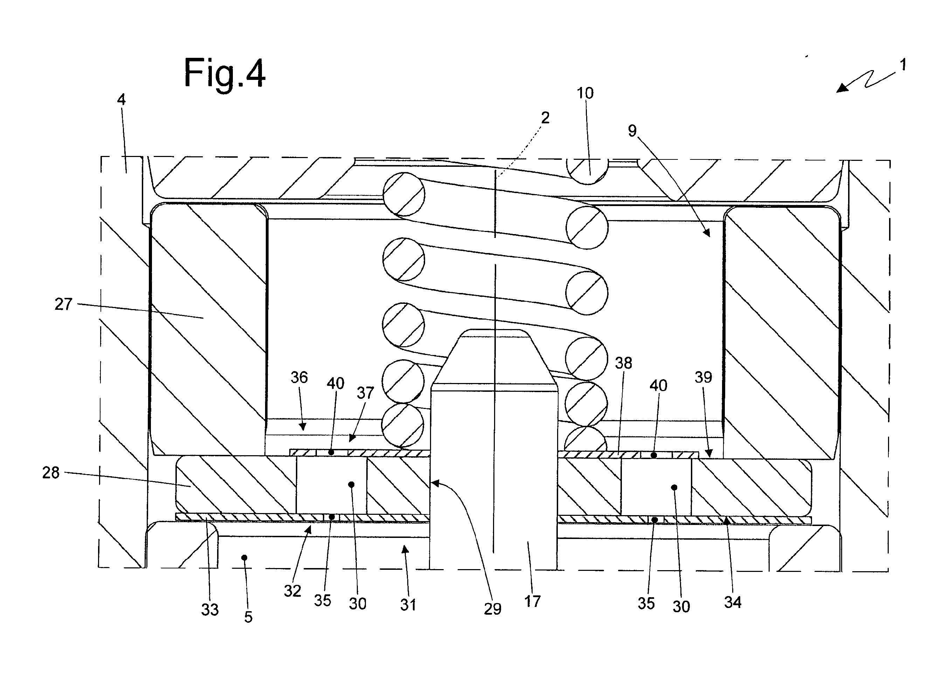

Four through feeding holes 23 (only two of which are shown in figure 2), which lead towards the valve seat 18 to allow the flow of pressurized fuel towards the valve seat 18 itself, are obtained in the lower part of the guiding element 21. The feeding holes 23 may be either offset with respect to the longitudinal axis 2 so as not to converge towards the longitudinal axis 2 itself and to impress in use a vortex pattern to the respective fuel flows, or the feeding holes 23 may converge towards the longitudinal axis 2. As shown in figure 4, the feeding holes 23 are arranged at an 80° angle (more generally from 70° to 90°) with the longitudinal axis 2; according to a different embodiment (not shown), the feeding holes 23 form a 90° angle with the longitudinal axis 2.

Needle 17 ends with a substantially spherical shutter head 24, which is adapted to fluid-tightly rest against the valve seat 18; alternatively, the shutter head 24 has an essentially cylindrical shape, having only the abutment zone with a spherical shape. Furthermore, the shutter head 24 slidingly rests on an inner surface 21 of the guiding element 29 so as to be guided in its movement along the longitudinal axis 2. The injection nozzle 3 is defined by a plurality of injection through holes 25 which are obtained from an injection chamber 26 arranged downstream of the valve seat 18.

As shown in figure 4, each plunger 9 comprises an annular (tubular) element 27 and a discoid element 28, which closes the bottom of the annular element 27 and has a central through hole 29 adapted to receive a portion of needle 17 and a plurality of peripheral feeding through holes 30 (only two of which are shown in figure 4) adapted to allow the fuel to flow towards the injection nozzle 3. Needle 17 is made integral with the discoid element 28 of each plunger 9 by means of an annular welding with surrounds the central hole 29. A central portion of the discoid element 28 of the plunger 9 of the upper electromagnet 8 abuts against a lower end of spring 10.

As mentioned above, the outer diameter of the annular element 27 of the plunger 9 of the upper electromagnet 8 is substantially the same as the inner diameter of the corresponding portion of the feeding channel 5 of the supporting body 4; thereby, such a plunger 9 can slide with respect to the supporting body 4 along the longitudinal axis 2, but cannot perform any movement transverse to the longitudinal axis 2 with respect to the supporting body 4. Being needle 17 firmly connected to the plunger 9 of the upper electromagnet 8, it is apparent that such a plunger 9 also serves the function of upper guide of the needle 17; accordingly, needle 17 is guided by the plunger 9 of the upper electromagnet 8 on the top and by the guiding element 21 at the bottom.

An anti-rebound device 31 of the hydraulic type, which is adapted to attenuate the bouncing of the shutter head 20 of needle 17 against the valve seat 18 when needle 17 moves from the opening position to the closing position of the injection valve 7, is connected to the lower face of the discoid element 28 of plunger 9. The anti-rebound device 31 comprises a plurality of valve elements 32, each of which is coupled to a respective peripheral feeding hole 30 of plunger 9 and has a different permeability to the passage of fuel as a function of the passage direction of the fuel itself through the feeding hole 30. In particular, each valve element 32 comprises an elastic blade 33, which is partially fixed to a lower surface 34 of plunger 9 only on one side of the respective feeding hole 30 and has a small-sized calibrated hole 35 aligned with the feeding hole 30 itself; when the fuel flows downwards, i.e. towards the injection nozzle 3, blade 33 is deformed under the bias of the fuel and leaves the fuel passage through the feeding hole 30 substantially free, while when the fuel flows upwards, blade 33 adheres to the lower surface 34 of plunger 9 under the bias of the fuel, thus closing the feeding hole 30 and allowing the fuel to pass through its small-sized calibrated hole 35 only. In other words, the anti-rebound device 31 forms a system for asymmetrically damping the kinetic energy of the plunger 9 of the upper electromagnet 8.

The blade 33 of the anti-rebound device 31 is calibrated so as to adhere to the lower surface 34 of plunger 9 only when needle 17 is close to the closing position; thereby, the anti-rebound device 31 slows down the closing movement of needle 17 only along the last stretch just before the impact of needle 17 against the valve seat 18 and not along the whole closing stroke. By virtue of the slowing action exerted by the anti-rebound device 31, needle 17 is slowed down just before impacting against the valve seat 18, and thus the elastic bouncing of needle 17 against the valve seat 18 is greatly reduced. In order to achieve this result, the blade 33 of the anti-rebound device 31 is dimensioned to be relatively rigid and heavy, and thus have a higher mechanical inertia; from the practical point of view, the blade 33 of the anti-rebound device 31 is relatively thick. By virtue of the relatively high mechanical inertia of the blade 33 of the anti-rebound device 31, the intervention of the anti-rebound device 31 is delayed with respect to the beginning of the step of closing the injection valve 7, and thus the anti-rebound device 31 only intervenes when needle 17 is about to impact against the valve seat 18.

In other words, the anti-rebound device 31 hydraulically dissipates more kinetic energy when needle 17 moves towards the closing position of the injection valve 7 than when needle 17 moves towards the opening position of the injection valve 7. Such an effect is achieved by virtue of the fact that each valve element 34 of the anti-rebound device 31 has a different permeability to the passage of fuel as a function of the passage direction of the fuel itself through the feeding hole 30 so as to have a lower permeability to the passage of fuel when needle 17 moves towards the closing position of the injection valve 7 and a higher permeability to the passage of fuel when needle 17 moves towards the opening position of the injection valve 7.

A braking device 36 of the hydraulic type, which is adapted to slow down the opening movement of needle 17, i.e. the movement with which needle 17 moves from the closing position to the opening position of the injection valve 7, is connected to the upper face of the discoid element 28 of the plunger 9 of the upper electromagnet 8 (i.e. on the opposite side with respect to the anti-rebound device 31). The braking device 36 comprises respective valve elements 37, each of which is coupled to a respective peripheral feeding hole 30 of plunger 9 and has a different permeability to the passage of fuel as a function of the passage direction of the fuel itself through the feeding hole 30. In particular, each valve element 37 comprises an elastic blade 38, which is partially fixed to an upper surface 39 of plunger 9 only on one side of the respective feeding hole 30 and has a small-sized calibrated hole 40 aligned with the feeding hole 30 itself; when needle 17 moves downwards, i.e. when needle 17 moves from the opening position to the closing position, blade 38 is deformed under the bias of the fuel and leaves the passage of fuel through the feeding hole 30 substantially free, while when needle 17 moves upwards, i.e. when needle 17 moves from the closing position to the opening position, blade 33 adheres to the upper surface 39 of plunger 9 under the bias of the fuel, thus closing the feeding hole 30 and allowing the fuel to pass only through its small-sized calibrated hole 40. In other words, the braking device 36 forms a device for asymmetrically damping the kinetic energy possessed by the plunger 9 of the upper electromagnet 8.

In other words, the braking device 36 hydraulically dissipates more kinetic energy when needle 17 moves towards the opening position of the injection valve 7 than when needle 17 moves towards the closing position of the injection valve 7 so as to slow down the opening stroke of needle 17 when needle 17 moves towards the opening position of the injection valve 7. Such an effect is achieved by virtue of the fact that each valve element 37 of the braking device 36 has a lower permeability to the passage of the fuel when needle 17 moves towards the opening position of the injection valve 7 and a higher permeability to the passage of the fuel when needle 17 moves towards the closing position of the injection valve 7.

When the injection valve 7 is closed, there is an autoclave force of hydraulic nature which pushes on the shutter head 24 and maintains the shutter head 24 in the closing position. Therefore, in order to open the injection valve 7, the electromagnetic actuator 6 needs to generate on needle 17 a force to overcome the autoclave force added to the elastic bias exerted by the closing spring 10; however, the autoclave force suddenly disappears as soon as the injection valve 7 opens, and thus the injection valve 7 would tend to open very quickly and violently with an extremely fast upward movement of needle 17. When the injection valve 7 opens and the autoclave force suddenly disappears, the action of the braking device 36 slows down the opening movement (i.e. the upward movement) of needle 17, because it determines a hydraulic dissipation of part of the kinetic energy possessed by needle 17. Such a slowing action determined by the braking device 36 is particularly valuable, because it prevents the injection valve 7 from opening very quickly and violently with an extremely fast upward movement of needle 17; in essence, by virtue of the presence of the braking device 36, the opening of the injection valve 7 is slowed down to the benefit of greater controllability (i.e. better accuracy and repeatability) of the fuel injection in the ballistic zone of the injection law (i.e. the law which relates the actuation time, i.e. the control time, to the injected fuel amount). In other words, the action of the braking device 36 allows to stabilize the initial part (i.e. the ballistic zone) of the injection law.

The blade 38 of the braking device 36 is calibrated so as to have a low mechanical inertia to allow a nearly instantaneous intervention of the braking device 36 as soon as the injection valve 7 starts opening. Indeed, the braking device 36 must intervene more quickly as soon as the injection valve 7 starts opening. In order to achieve this result, the blade 38 of the braking device 36 is dimensioned to be very flexible and light in weight, and thus have a low mechanical inertia; from the practical point of view, the blade 38 of the braking device 36 is relatively thin. By virtue of the low mechanical inertia of the blade 38 of the braking device 36, the intervention of the braking device 36 is nearly simultaneous to the beginning of the step of opening of the injection valve 7.

According to the above description, it is apparent that the mechanical inertia of the braking device 36 (i.e. of the blade 38 of the braking device 36) is lower than the mechanical inertia of the anti-rebound device 31 (i.e. of the blade 33 of the anti-rebound device 31), because the braking device 36 must intervene instantaneously, while the anti-rebound device 31 must intervene with a given delay.

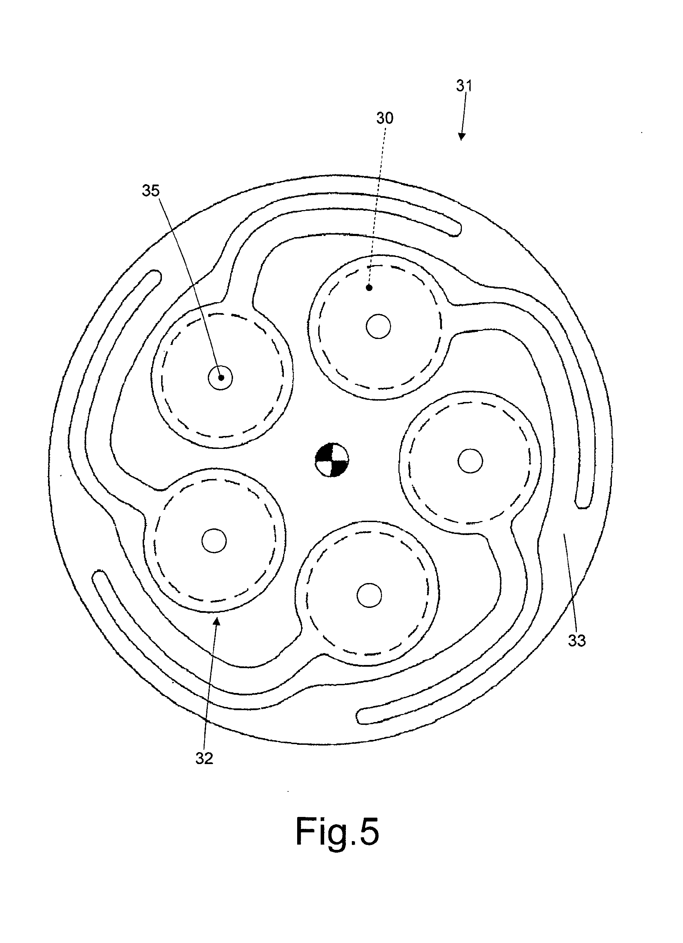

As shown in figure 5, the elastic blade 33 of the anti-rebound device 31 is fixed to the discoid element 28 at a peripheral edge thereof and is provided with a series of petals, each of which is coupled to a respective feeding hole 30 and has a calibrated hole 35 in the center. Each petal of the elastic blade 33 is normally arranged in a closing position of the feeding hole 30 and is movable, during the opening stroke of piston 21, from the closing position to an opening position of the feeding hole 30 itself. The elastic blade 33 comprises an outer crown, which is fixed to the lower surface 34 of the discoid element 28 by welding (preferably by means of spot laser welding); the petals extend from the crown inwards, each petal comprising a circular sealing element (in the center of which a calibrated hole 35 is obtained) connected to the crown by means of a thin shaft, i.e. having a length much longer than the width, in order to be elastically deformed.

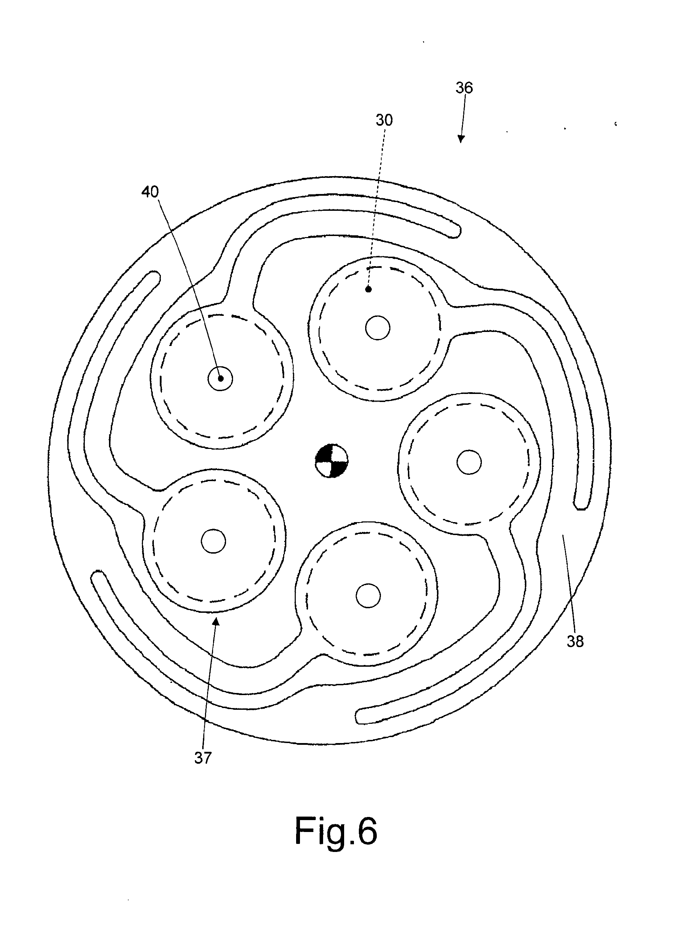

As shown in figure 6, the elastic blade 38 of the braking device 36 is fixed to the discoid element 28 at a peripheral edge thereof and is provided with a series of petals, each of which is coupled to a respective feeding hole 30 and has a calibrated hole 40 in the center. Each petal of the elastic blade 38 is normally arranged in a closing position of the feeding hole 30 and is movable, during the closing stroke of piston 21, from the closing position to an opening position of the feeding hole 30 itself. The elastic blade 38 comprises an outer crown, which is fixed to the upper surface 39 of the discoid element 28 by welding (preferably by means of spot laser welding); the petals extend from the crown inwards, each petal comprising a circular sealing element (in the center of which a calibrated hole 40 is obtained) connected to the crown by means of a thin shaft, i.e. having a length much longer than the width, in order to be elastically deformed.

In the embodiment shown in the accompanying figures, the plunger 9 of the upper electromagnet 8 is the only upper guide of needle 17 and supports both the anti-rebound device 31 and the braking device 36; the devices 31 and 36 are preferably coupled to the plunger 9 of the upper electromagnet 8, because such a plunger 9 provides a better lateral hydraulic sealing with respect to the inner surface of the feeding channel 5 (i.e. lesser lateral leakages of fuel) and thus allows to obtain a better operation of the devices 31 and 36 themselves. According to an alternative, perfectly equivalent embodiment (not shown), the plunger 9 of the lower electromagnet 8 could form the only upper guide of needle 17 and thus, in this case, the devices 31 and 36 would be preferably coupled to the plunger 9 of the lower electromagnet 8. According to a further, perfectly equivalent embodiment (not shown), both plungers 9 could form the two upper guides of needle 17 and thus, in this case, the devices 31 and 36 could be either coupled to the plunger 9 of the lower electromagnet 8 or to the plunger 9 of the upper electromagnet 8.

Needle 17 has a cylindrical symmetry shaft, to which the substantially spherical shutter head 24 is connected by means of an annular welding. In turn, the shaft is connected to the discoid element 28 of each plunger 9 by means of an annular welding.

The above-described injector 1 has many advantages.

Firstly, the above-described injector 1 has extremely high dynamic performance (i.e. is capable of opening and closing the injection valve 7 very quickly) even when the fuel feeding pressure is high (even higher than 50 Mpa). Such a result is achieved essentially by virtue of the use of two twin electromagnets 8 of relatively small size, thus having low mechanical and magnetic inertia.

Furthermore, the above-described injector 1 has a linear, uniform (i.e. without irregularities) injection law (i.e. the law which relates the driving time to the injected fuel amount), even for short driving times (i.e. in the ballistic zone) and thus for small injected fuel amounts. Thereby, the above-described injector 1 allows to inject small fuel amounts in an accurate, repeatable manner.

Finally, the above-described injector 1 is simple and cost-effective to be manufactured because no machining and/or assembly operations substantially different from those of a traditional electromagnetic fuel injector are required.

## Claims

1. A fuel injector (1) comprising:
an injection nozzle (3);
an injection valve (7) provided with a movable needle (17) to adjust the flow of fuel through the injection nozzle (3);
an electromagnetic actuator (6) to move the needle (17) between a closing position and an opening position of the injection valve (7), provided with at least one electromagnet (8) comprising a coil (11), a fixed magnetic armature (12), and a movable plunger (9), which is mechanically connected to the needle (17) and has at least one feeding through hole (30) for the passage of fuel towards the injection nozzle (3);
a closing spring (10) which tends to hold the needle (17) in the closing position; and
a tubular supporting body (4) provided with a central channel (5), which houses the fixed magnetic armature (12) and the movable plunger (9);
the injector (1) is **characterized in that** the plunger (9) is provided with a braking device (36) of the hydraulic type, which is coupled to the feeding hole (30) and hydraulically dissipates more kinetic energy when the needle (17) moves towards the opening position of the injection valve (7) than when the needle (17) moves towards the closing position of the injection valve (7) so as to slow down the opening stroke of the needle (17), when the needle (17) moves towards the opening position of the injection valve (7).

2. An injector (1) according to claim 1, wherein the braking device (36) of the hydraulic type comprises a first valve element (37), which is coupled to the feeding hole (30) of the plunger (9) and has a different permeability to the passage of fuel as a function of the passage direction of the fuel itself through the feeding hole (30) so as to have a lower permeability to the passage of fuel when the needle (17) moves towards the opening position of the injection valve (7) and a higher permeability to the passage of fuel when the needle (17) moves towards the closing position of the injection valve (7).

3. An injector (1) according to claim 2, wherein the first valve element (37) comprises a first elastic blade (38), which is partially fixed to an upper surface (39) of the plunger (9) and has a first small-sized calibrated hole (40), which is arranged at the feeding hole (30).

4. An injector (1) according to one of the claims from 1 to 3, wherein the plunger (9) is provided with an anti-rebound device (31) of the hydraulic type, which is coupled to the feeding hole (30),is arranged on the opposite side with respect to the braking device (36), and hydraulically dissipates more kinetic energy when the needle (17) moves towards the closing position of the injection valve (7) than when the needle (17) moves towards the opening position of the injection valve (7).

5. An injector (1) according to claim 4, wherein the anti-rebound device (31) of the hydraulic type comprises a second valve element (32), which is coupled to the feeding hole (30) of the plunger (9) and has a different permeability to the passage of fuel as a function of the passage direction of the fuel itself through the feeding hole (30) so as to have a higher permeability to the passage of fuel when the needle (17) moves towards the opening position of the injection valve (7) and a lower permeability to the passage of fuel when the needle (17) moves towards the closing position of the injection valve (7).

6. An injector (1) according to claim 5, wherein the second valve element (32) comprises a second elastic blade (33), which is partially fixed to a lower surface (34) of the plunger (9) and has a second small-sized calibrated hole (35)arranged at the feeding hole (30).

7. An injector (1) according to one of the claims from 4 to 6, wherein the mechanical inertia of the braking device (36) is lower than the mechanical inertia of the anti-rebound device (31), so that the braking device (36) intervenes before the anti-rebound device (31).

8. An injector (1) according to one of the claims from 1 to 7, wherein the plunger (9) comprises an annular element (27) and a discoid element (28), which closes the bottom of the annular element (27) and has a central through hole (29) adapted to receive a portion of the needle (17) and a plurality of peripheral feeding through holes (30) adapted to allow the fuel to flow towards the injection nozzle (3).

9. An injector (1) according to one of the claims from 1 to 8, wherein the supporting body (4) has at least one annular slot (15) obtained on the outer surface of the supporting body (4) itself; the coil (11) of the electromagnet (8) is directly wound inside the annular slot (15).

10. An injector (1) according to claim 9 and comprising a protection body (16), which has a tubular shape and is arranged about the supporting body (4) at the coil (11).

11. An injector (1) according to one the claims from 1 to 10, wherein the electromagnetic actuator (6) comprises two electromagnets (8) axially arranged side by side.

12. An injector (1) according to claim 11, wherein the plunger (9) of a first electromagnet (8) has a shorter effective stroke than the effective stroke of the plunger (9) of a second electromagnet (8).

13. An injector according to claim 11 or 12, wherein only the plunger (9) of the first electromagnet (8) forms an upper guide of the needle (17).

## Patentansprüche

1. Kraftstoffeinspritzventil (1), aufweisend:
eine Einspritzdüse (3);
ein Einspritzventil (7) mit einer beweglichen Nadel (17), um den Kraftstoffstrom durch die Einspritzdüse (3) zu regulieren;
einen elektromagnetischen Antrieb (6), um die Nadel (17) zwischen einer Schließstellung und einer Öffnungsstellung des Einspritzventils (7) zu bewegen, versehen mit mindestens einem Elektromagnet (8), aufweisend eine Spule (11), einen festen magnetischen Anker (12) und einen beweglichen Kolben (9), der mit der Nadel (17) mechanisch verbunden ist und mindestens ein speisendes Durchgangsloch (30) für den Durchgang von Kraftstoff in Richtung der Einspritzdüse (3) besitzt;
eine Schließfeder (10), die bestrebt ist, die Nadel (17) in der Schließstellung zu halten; und
einen rohrförmigen, tragenden Körper (4) mit einem mittigen Kanal (5), der den festen magnetischen Anker (12) und den beweglichen Kolben (9) aufnimmt;
das Einspritzventil (1) ist **dadurch gekennzeichnet, dass** der Kolben (9) mit einer Bremsvorrichtung (36) von hydraulischer Bauart versehen ist, die mit dem speisenden Loch (30) verbunden ist und mehr kinetische Energie hydraulisch ableitet, wenn die Nadel (17) sich in Richtung der Öffnungsstellung des Einspritzventils (7) bewegt als wenn die Nadel (17) sich in Richtung der Schließstellung des Einspritzventils (7) bewegt, um den Öffnungshub der Nadel (17) zu verlangsamen, wenn die Nadel (17) sich in Richtung der Öffnungsstellung des Einspritzventils (7) bewegt.

2. Einspritzventil (1) nach Anspruch 1, wobei die Bremsvorrichtung (36) von hydraulischer Bauart ein erstes Ventilelement (37) aufweist, das mit dem speisenden Loch (30) des Kolbens (9) verbunden ist und eine unterschiedliche Durchlässigkeit für den Durchgang von Kraftstoff in Abhängigkeit von der Durchgangsrichtung des Kraftstoffs durch das speisende Loch (30) besitzt, um eine geringere Durchlässigkeit für den Durchgang von Kraftstoff zu erreichen, wenn die Nadel (17) sich in Richtung der Öffnungsstellung des Einspritzventils (7) bewegt, und eine größere Durchlässigkeit für den Durchgang von Kraftstoff, wenn die Nadel (17) sich in Richtung der Schließstellung des Einspritzventils (7) bewegt.

3. Einspritzventil (1) nach Anspruch 2, wobei das erste Ventilelement (37) ein erstes elastisches Blatt (38) aufweist, das teilweise an einer oberen Oberfläche (39) des Kolbens (9) befestigt ist und ein erstes klein bemessenes, kalibriertes Loch (40), das am speisenden Loch (30) angeordnet ist, besitzt.

4. Einspritzventil (1) nach einem der Ansprüche von 1 bis 3, wobei der Kolben (9) mit einer Rückprallverhütungsvorrichtung (31) von hydraulischer Bauart versehen ist, die mit dem speisenden Loch (30) verbunden ist, auf der gegenüberliegenden Seite in Bezug auf die Bremsvorrichtung (36) angeordnet ist und mehr kinetische Energie hydraulisch ableitet, wenn die Nadel (17) sich in Richtung der Schließstellung des Einspritzventils (7) bewegt als wenn die Nadel (17) sich in Richtung der Öffnungsstellung des Einspritzventils (7) bewegt.

5. Einspritzventil (1) nach Anspruch 4, wobei die Rückprallverhütungsvorrichtung (31) von hydraulischer Bauart ein zweites Ventilelement (32) aufweist, das mit dem speisenden Loch (30) des Kolbens (9) verbunden ist und eine unterschiedliche Durchlässigkeit für den Durchgang von Kraftstoff in Abhängigkeit von der Durchgangsrichtung des Kraftstoffs durch das speisende Loch (30) besitzt, um eine größere Durchlässigkeit für den Durchgang von Kraftstoff zu erreichen, wenn die Nadel (17) sich in Richtung der Öffnungsstellung des Einspritzventils (7) bewegt, und eine geringere Durchlässigkeit für den Durchgang von Kraftstoff, wenn die Nadel (17) sich in Richtung der Schließstellung des Einspritzventils (7) bewegt.

6. Einspritzventil (1) nach Anspruch 5, wobei das zweite Ventilelement (32) ein zweites elastisches Blatt (33) aufweist, das teilweise an einer unteren Oberfläche (34) des Kolbens (9) befestigt ist und ein zweites klein bemessenes, kalibriertes Loch (35), am speisenden Loch (30) angeordnet, besitzt.

7. Einspritzventil (1) nach einem der Ansprüche von 4 bis 6, wobei die mechanische Trägheit der Bremsvorrichtung (36) geringer als die mechanische Trägheit der Rückprallverhütungsvorrichtung (31) ist, sodass die Bremsvorrichtung (36) vor der Rückprallverhütungsvorrichtung (31) eingreift.

8. Einspritzventil (1) nach einem der Ansprüche von 1 bis 7, wobei der Kolben (9) ein ringförmiges Element (27) und ein scheibenförmiges Element (28) aufweist, das die Unterseite des ringförmigen Elements (27) schließt und ein mittiges Durchgangsloch (29), das angepasst ist, einen Abschnitt der Nadel (17) aufzunehmen, und eine Vielzahl peripherer speisender Durchgangslöcher (30), die angepasst sind, den Kraftstoffstrom in Richtung der Einspritzdüse (3) zu erlauben, besitzt.

9. Einspritzventil (1) nach einem der Ansprüche von 1 bis 8, wobei der tragende Körper (4) mindestens einen ringförmigen Schlitz (15) hat, der auf der äußeren Oberfläche des tragenden Körpers (4) selbst erhalten wird; die Spule (11) des Elektromagneten (8) ist innerhalb des ringförmigen Schlitzes (15) direkt gewickelt.

10. Einspritzventil (1) nach Anspruch 9 und einen Schutzkörper (16) aufweisend, der rohrförmig ist und um den tragenden Körper (4) herum an der Spule (11) angeordnet ist.

11. Einspritzventil (1) nach einem der Ansprüche von 1 bis 10, wobei der elektromagnetische Antrieb (6) zwei Seite an Seite axial angeordnete Elektromagnete (8) aufweist.

12. Einspritzventil (1) nach Anspruch 11, wobei der Kolben (9) eines ersten Elektromagneten (8) einen effektiven Hub hat, der kürzer als der effektive Hub des Kolbens (9) eines zweiten Elektromagneten (8) ist.

13. Einspritzventil nach Anspruch 11 oder 12, wobei nur der Kolben (9) des ersten Elektromagneten (8) eine obere Führung der Nadel (17) bildet.

## Revendications

1. Injecteur de carburant (1) comprenant :
une buse d'injection (3) ;
une soupape d'injection (7) munie d'une aiguille mobile (17) destinée à régler l'écoulement du carburant à travers la buse d'injection (3) ;
un actionneur électromagnétique (6) destiné à déplacer l'aiguille (17) entre une position de fermeture et une position d'ouverture de la soupape d'injection (7), et muni d'au moins un électro-aimant (8) qui comprend une bobine (11), une culasse magnétique fixe (12) et un plongeur mobile (9) qui est relié mécaniquement à l'aiguille (17) et présente au moins un trou d'alimentation traversant (30) qui donne passage au carburant en direction de la buse d'injection (3) ;
un ressort de fermeture (10) qui tend à maintenir l'aiguille (17) dans la position de fermeture ; et
un corps support tubulaire (4) muni d'un canal central (5), lequel loge la culasse magnétique fixe (12) et le plongeur mobile (9) ;
l'injecteur (1) est **caractérisé en ce que** le plongeur (9) est équipé d'un dispositif de freinage (36) du type hydraulique, qui est couplé au trou d'alimentation (30) et qui dissipe hydrauliquement plus d'énergie cinétique lorsque l'aiguille (17) se déplace en direction de la position d'ouverture de la soupape d'injection (7) que lorsque l'aiguille (17) se déplace en direction de la position de fermeture de la soupape d'injection (7) de sorte qu'il ralentit la course d'ouverture de la soupape (17) lorsque l'aiguille (17) se déplace en direction de la position d'ouverture de la soupape d'injection (7).

2. Injecteur (1) selon la revendication 1, dans lequel le dispositif de freinage du type hydraulique (36) comprend un premier élément de soupape (37) qui est couplé au trou d'alimentation (30) du plongeur (9) et possède une perméabilité au passage de carburant qui varie en fonction du sens du passage du carburant lui-même à travers le trou d'alimentation (30) de sorte qu'il a une plus basse perméabilité au passage du carburant lorsque l'aiguille (17) se déplace en direction de la position d'ouverture de la soupape d'injection (7) et une plus haute perméabilité au passage du carburant lorsque l'aiguille (17) se déplace en direction de la position de fermeture de la soupape d'injection (7).

3. Injecteur (1) selon la revendication 2, dans lequel le premier élément de soupape (37) comprend une première lame élastique (38) qui est partiellement fixée à une surface supérieure (39) du plongeur (9) et présente un premier trou calibré de petite dimension (40) qui est placé au droit du trou d'alimentation (30).

4. Injecteur (1) selon l'une des revendications 1 à 3, dans lequel le plongeur (9) est équipé d'un dispositif anti-rebond du type hydraulique (31) qui est couplé au trou d'alimentation (30), est placé sur le côté opposé, par rapport au dispositif de freinage (36), et dissipe hydrauliquement plus d'énergie cinétique lorsque l'aiguille (17) se déplace en direction de la position de fermeture de la soupape d'injection (7) que lorsque l'aiguille (17) se déplace en direction de la position d'ouverture de la soupape d'injection (7).

5. Injecteur (1) selon la revendication 4, dans lequel le dispositif anti-rebond du type hydraulique (31) comprend un second élément de soupape (32) qui est couplé au trou d'alimentation (30) du plongeur (9) et présente une perméabilité au passage du carburant qui varie en fonction du sens de passage du carburant lui-même à travers le trou d'alimentation (30), de sorte qu'il a une plus haute perméabilité au passage du carburant lorsque l'aiguille (17) se déplace en direction de la position d'ouverture de la soupape d'injection (7) et une plus basse perméabilité au passage du carburant lorsque l'aiguille (17) se déplace en direction de la position de fermeture de la soupape d'injection (7).

6. Injecteur selon la revendication 5, dans lequel le second élément de soupape (32) comprend une seconde lame élastique (33), qui est partiellement fixée à une surface inférieure (34) du plongeur (9) et présente un second trou calibré de petite dimension (35) placé au droit du trou d'alimentation (30).

7. Injecteur (1) selon l'une des revendications 4 à 6, dans lequel l'inertie mécanique du dispositif de freinage (36) est plus basse que l'inertie mécanique du dispositif anti-rebond (31), de sorte que le dispositif de freinage (36) intervient avant le dispositif anti-rebond (31).

8. Injecteur (1) selon l'une des revendications 1 à 7, dans lequel le plongeur (9) comprend un élément annulaire (27) et un élément discoïde (28) qui ferme le fond de l'élément annulaire (27) et présente un trou traversant central (29) apte à recevoir une partie de l'aiguille (17) et une pluralité de trous d'alimentation traversants périphériques (30) aptes à laisser le carburant s'écouler en direction de la buse d'injection (3).

9. Injecteur (1) selon l'une des revendications 1 à 8, dans lequel le corps support (4) présente au moins une rainure annulaire (15) ménagée sur la surface extérieure du corps support (4) lui-même ; la bobine (11) de l'électro- aimant (8) est directement enroulée dans la rainure annulaire (15).

10. Injecteur (1) selon la revendication 9 et comprenant un corps de protection (16) qui présente une forme tubulaire et est disposé autour du corps support (4) au niveau de la bobine (11).

11. Injecteur (1) selon l'une des revendications 1 à 10, dans lequel l'actionneur électromagnétique (6) comprend deux électro-aimants (8) disposés côte à côte dans la direction axiale.

12. Injecteur (1) selon la revendication 11, dans lequel le plongeur (9) du premier électro-aimant (8) a une course effective plus courte de que la course effective du plongeur (9) du second électro-aimant (8).

13. Injecteur selon la revendication 11 ou 12, dans lequel seul le plongeur (9) du premier électro-aimant (8) forme un guide supérieur pour l'aiguille (17).
